# EUROPEAN PATENT SPECIFICATION

(11) **EP 2 473 666 B1**
(45) Date of publication and mention of the grant of the patent: **23.04.2014**
(21) Application number: 10742668.6
(22) Date of filing: 03.08.2010
(51) Int. Cl.: D06M 13/288, D06M 23/08, C09K 21/12, D06M 15/263

(54) **FLAME RETARDANT COATING COMPOSITION FOR TEXTILES AND PROCESS FOR COATING TEXTILE SUBSTRATES**
FLAMMHEMMENDE TEXTILBESCHICHTUNGSZUSAMMENSETZUNG UND VERFAHREN ZUM BESCHICHTEN EINES TEXTILSUBSTRATS
COMPOSITION DE REVÊTEMENT IGNIFUGE POUR TEXTILES ET PROCÉDÉ POUR REVÊTIR DES SUBSTRATS TEXTILE

(30) Priority: 01.09.2009 US 238899 P
(43) Date of publication of application: 11.07.2012
(73) Proprietor: ICL-IP America Inc., Ardsley, NY 10502 (US)
(72) Inventor: LEVCHIK, Sergei, V., Croton-on-Hudson NY 10520 (US); MAZOR, Royi, 85325 Kibbutz Bet Kama (IL); BEN-ZVI, Avi, 85025 Meitar (IL)
(74) Representative: De Vries & Metman
(86) International application number: PCT/US2010/044237
(87) International publication number: WO 2011/028351

(56) References cited:
- DE-A1- 3 833 977
- US-A- 4 288 489

## Description

### Field of the Invention

The present invention relates to the field of flame retardants (FRs) and, more particularly, to a flame retardant composition for use in textiles.

### Background of Invention

Textiles are an essential part of everyday life and are found, for example, in draperies, cloths, furniture and vehicle upholsteries, toys, packaging material and many more applications. Consequently, textile flammability is of concern.

The flammability of fabrics is typically determined by the nature of the fiber comprising the fabric. Thus for example, some synthetic fibers, such as melamine, polyaramides, carbonized acrylic, and glass, are inherently flame resistant, whereby others, such as cotton, polyester and linen, can readily ignite. For those, the degree of flammability varies according to the fiber type and characteristics. For example, a textile made of a blend of fibers usually bums faster and to higher temperatures compared with each fiber type alone. Fabric flammability also depends on the fabric thickness and/or looseness.

Several approaches have been proposed heretofore for retarding the flammability of flammable textiles:

One approach involves fiber copolymerization: several fiber monomers are mixed and copolymerized, thus improving the properties of a certain fiber (e.g., a flammable fiber) through the enhanced properties of another fiber (e.g., a fire resistant fiber). However, this technique is limited by the number of existing fibers and their properties, and cannot be tailor-made for any substrate or requirements. Furthermore, fiber types and fiber polymerization types are not necessarily compatible, thus further limiting the applicability of this technique. An additional disadvantage of this approach is the high cost of the fire resistant fibers.

Another approach involves the introduction of flame retardant (FR) in or on the fabric, using one of three methodologies:
(i) Chemical post treatment: the fabric is treated with flame retardant chemicals after it has been produced, either by coating the fabric, or by the introduction of the FR into the fabric during the final dyeing process. The flame retardant can be applied to the back of the fabric (termed "back-coating") or to its front (termed "front-coating"), depending on the specific fabric application. For example, for draperies, furniture upholstering garments and linen, where the aesthetic appearance of the front side of the fabric is most important, back-coating is desired;
(ii) Fiber-additive matrix (also termed "compounding"): the FR is linked to the fiber during the melt spinning process, such that a fiber-additive molten plastic matrix is formed. This methodology has many drawbacks: (a) degradation of the FR agent due to the high extrusion temperatures, (b) reaction of the FR agent with the extruded fiber, and subsequent modification of the fiber properties, such as fiber dyeability, fiber processability or other physical properties of the fiber, and (c) reaction of the FR agent with the various polymeric additives, such as dyes or catalysts; and,
(iii) Finishing of flame retardant additive onto fabric surface either directly or using finish chemicals (resins) which chemically link flame retardant to the fabric. Disadvantages of this method are (a) usually finishes can be applied to cotton fibers, but they are not able to be effectively applied to synthetic fibers because of the absence of the necessary functional groups with which they would have to react in such an application, (b) some finishes use toxic chemicals like formaldehyde containing resins which can release formaldehyde, and (c) in some finishes gaseous ammonia is used as a curing agent.

Selecting the suitable flame retardant and the suitable methodology for applying it to the fabric largely depends on the specific textile substrate which has to be protected, e.g., the protection of a garment, or the protection of an electrical appliance will inherently pose different requirements and restrictions of the flame retardant used.

When used in textiles, an applied flame retardant should be: (a) compatible with the fabric, (b) non-damaging to the aesthetical and textural properties of the fabric, (c) transparent, (d) light stable, (e) resistant to extensive washing and cleaning, (f) environmentally and physiologically safe, (g) of low toxic gas emission, and (h) inexpensive. Above all, a flame retardant should pass the standard flammability tests in the field.

Properties of the FR such as stability to UV light, heat, water, detergents and air-pollutants, as well as chemical stability, may be summed-up under the term "durability". The most durable textiles are those which are inherently flame retardant, or which contain reactive (chemically bound) flame retardants ((iii) above). In the latter, the degree of durability depends on the strength of the bonds between the flame retardant formulation and the fiber. Additive (mixed) flame retardants ((ii) above), or chemically applied flame retardants ((i) above) which are water-soluble, are considered less durable. Furthermore, topically applied FR agents ((i) above) are generally not as durable as those which are incorporated into the fabric during the extrusion of the fiber ((ii) above). Thus, the topically applied FR agent ((i) above) may be washed off during the laundry cycle, and in these cases the expensive and burdensome dry cleaning of the textile has to be used.

Presently, there are four main families of flame-retardant chemicals:
- Inorganic flame retardants (such as aluminum hydroxide, magnesium hydroxide and ammonium polyphosphate);
- Halogenated flame retardants, primarily based on bromine and chlorine;
- Organophosphorus flame retardants, which are primarily phosphate esters; and
- Nitrogen-based organic flame retardants.

Bromine-containing compounds have been long established as flame retardants. The use of aromatic bromines as flame retardants for textiles, however, suffers major disadvantages including, for example, high bromine content demand, high dry add-on and/or binder demand, and a need to add compounds which enhance the flame retardancy. It is extremely undesirable to apply on a textile a flame retardant formulation in large amounts (also termed "high add-on") since high additive concentrations on the dry fabric results in inferior fabric properties, as well as increased cost of production. In addition, application of the noted flame retardants on fabrics may result in streak marks on dark fabrics, excessive dripping during combustion of thermoplastic fibers, relatively high level of smoldering and a general instability of the flame retardant dispersion which may prevent a uni form application thereof on the fabric. Most of these drawbacks are inherent to the aromatic bromine compounds currently in use.

In recent years there has been a significant effort made to develop and commercialize phosphorus-based flame retardants in textile coating formulations. For example there has been some use of ammonium polyphosphate or melamine polyphosphate in textile coating formulations. But both ammonium polyphosphate and melamine polyphosphate are difficult to mill to average particle sizes of less than 50 microns, and even more difficult to mill to average particle sizes of less that 20 microns. Therefore a coating suspension of ammonium polyphosphate or melamine polyphosphate is stable only for short period of time and the surface of the coating is rough. Furthermore, both ammonium polyphosphate and melamine polyphosphate are prone to hydrolysis therefore coated grades are preferable for textile applications.

US 4,288,489 discloses a process for the non-permanent flameproofing of organic fibrous materials with water-soluble monoammonium or monoalkali metal salts of an alkylphosphonic acid.

DE 3833977 discloses adducts of amines and metal phosphonates wherein the metal is a metal of groups II to VIII of the Periodic Table, and their use for preventive fire protection of a whole range of different materials.

Ongoing research has therefore been conducted in order to obtain flame-retardants with improved performance, which are less detrimental to textile properties. Research has been particularly focused on providing an efficient FR which requires low binder content and is characterized by good dispersion properties.

There is thus a widely recognized need for flame retardant formulations devoid of the above limitations.

### SUMMARY OF THE INVENTION

It has been surprisingly found that a textile can be rendered flame retardant with metal phosphonate as defined in claim 1, e.g., aluminum methyl methylphosphonate.

The term "fiber" as used hereinafter refers to a natural or synthetic filament capable of being spun into a yam or made into a fabric.

The terms "fabric", "textile", "textile fabric" and "textile substrate" are used herein interchangeably to describe a sheet structure made from fibers.

Fabric durability, as it is commonly defined, is a fabric meeting its performance standard after 5, 10 or 50 washes.

The term "carrier", as used herein, describes an inert material with which the composition is mixed or formulated to facilitate its application, or its storage, transport and/or handling. The carrier can be, for example, an organic carrier (e.g., alcohols, ketones, petroleum fractions, aromatic or paraffinic hydrocarbons, chlorinated hydrocarbons, or liquefied gases) or an aqueous carrier.

Since the flame retardant formulations described herein are particularly useful for the treatment of textiles, the carrier is preferably a textile acceptable carrier.

The term "textile acceptable carrier" as used herein refers to an inert, preferably environmentally acceptable carrier, which is not harmful to the textile.

As used herein, the term "flame retardant", describes a compound, a composition or a formulation which is capable of reducing or eliminating the tendency of a substance to sustain combustion when exposed to a small match-like or candle-like flame.

The "textile substrate" described herein can be a textile which has a surface that can be beneficially coated (either wholly or partially) with the flame retardant additive composition.

As is used herein, the term "flammable substrate" describes a textile substrate that easily ignites when exposed to a small flame. The flammability of different textile substrates or of articles made of these textile substrates is typically tested and determined according to flammability test methods. Representative examples include BS5852, Part 1, a standard test method for flammability of upholstered furniture.

There is provided herein a textile comprising a flame retardant effective amount of a flame retardant additive composition comprising a metal phosphonate as defined in claim 1.

There is also provided herein a process comprising applying a flame retardant effective amount of a flame retardant additive composition to a textile substrate wherein the flame retardant additive composition comprises a metal phosphonate as defined in claim 1.

There is further provided herein a process of preparing a flame retarded textile which comprises providing a flame retardant effective amount of an aqueous dispersion of metal phosphonate as defined in claim 1 to a textile.

### DESCRIPTION OF THE PREFERRED EMBODIMENTS

The metal phosphonate is selected from the group consisting of metal phosphonates of alkaline earth and/or transition metals such as for example, wherein the alkaline earth and/or transition metals are selected from the group consisting of Ca, Zn, Al, Fe, Ti and combinations thereof. Preferably, the metal phosphonate is aluminum methyl methylphosphonate (AMMP).

Aluminum methyl methylphosphonate is a phosphorus-based flame retardant (FR) containing a high level (i.e., 26 weight percent) of active phosphorus. Aluminum methyl methylphosphonate can be synthesized either by reacting methyl methylphosphonate with an aqueous solution of sodium hydroxide followed by precipitation with aluminum chloride, or by direct reaction of aluminum hydroxide with methyl methylphosphonate at 180° C with intensive stirring.

The amount of metal phosphonate can vary greatly depending on the textile substrate and any other components that are present in the flame retardant additive composition. Preferably, the amount of metal phosphonate in the flame retardant additive composition is from about 10 to about 70 weight percent, preferably, from about 20 to about 60 weight percent and most preferably from about 30 to about 60 weight percent, said weight percent being based on the total weight of the flame retardant additive composition.

According to one aspect of the invention, the flame retardant additive composition is in the form of a dispersion. Thus, according to preferred embodiments of the present invention, in each of the formulations described herein, the metal phosphonate, e.g., AMMP, is utilized in a form of a dispersion, which comprises a plurality of metal phosphonate particles having an average particle size of less than about 50 microns, dispersed in a carrier. Preferably, the dispersion comprises metal phosphonate particles having an average particle size of less than about 25 microns, more preferably less than about 10 microns and even more preferably less than about 5 microns. Preferred metal phosphonate dispersions according to the present embodiments comprise a plurality of metal phosphonate particles having an average size in the range of from about 0.1 microns to about 3 microns. It will be understood that any of the aforementioned average particle size ranges can have a lower end point of from about 0.1 microns.

In one embodiment herein, the flame retardant additive composition further comprises a carrier which can be selected from the group consisting of an aqueous carrier, an organic carrier and a combination thereof. Some non-limiting examples of organic carriers are alcohols, ketones, petroleum fractions, aromatic or paraffinic hydrocarbons, chlorinated hydrocarbons, or liquefied gases. Preferably the carrier is an aqueous carrier. More preferably the carrier is water. The amount of carrier can vary greatly provided that the carrier provides for a dispersion of the metal phosphonate which can be effectively coated onto a textile substrate to provide for reduced flammability of the textile. Generally the amount of carrier can be from about 20 to about 90 weight percent, most preferably from about 30 to about 60 weight percent based on the total weight of the flame retardant additive composition. It will be understood herein that all ranges recited for phosphonate, carrier and binder mean that the flame retardant additive composition cannot contain more than 100 weight percent of all of the components therein, and thus, all ranges of weight percents being recited herein can be adjusted accordingly if there is present binder and/or carrier as well as other additional ingredients. In one embodiment the amount of binder and/or carrier and any optional additional ingredients (e.g. the endpoints of the herein recited ranges) will be adjusted accordingly based on the amount of metal phosphonate present in the flame retardant additive composition.

According to one embodiment herein, the flame retardant additive composition further comprises a binding agent (also termed herein interchangeably as a "binder"). The use of a binder is utilized to improve adhesion of the molecules of the metal phosphonate herein, e.g., AMMP, to the textile substrate.

A suitable binder can be selected depending on the specific application. For example, different binders may be suitable to attach the FR additive composition described herein to different textiles. Preferably, when the flame retardant additive compositions described herein are applied to the textile, the binder is selected to be most suitable for use on the specific textile being employed, i.e., it is selected to be both non-damaging to the aesthetical and textural properties of the fabric, and durable (to washing, drying, UV light etc.). The binder used in the formulations described herein is also selected to be compatible with the metal phosphonate and any additional additives in the flame retardant additive composition.

The binder can thus be selected from a large variety of materials, including, but not limited to, synthetic polymers, such as styrene-butadiene (SBR) copolymers, carboxylated-SBR copolymers, melamine resins, phenol-aldehyde resins, polyesters, polyamides, polyureas, polyvinylidene chloride, polyvinyl chloride (PVC), acrylic acid-methylmethacrylate copolymers, acetal copolymers, polyurethanes, mixtures thereof and cross-linked versions thereof. Preferably, the binding agent is selected from the group comprising of an acrylate, a polyurethane, a polyvinyl chloride (PVC) and combinations thereof. Most preferably, the binder used in the formulations described herein is an acrylate.

Examples of acrylates that are suitable for use as binders in the context of the present invention include, but are not limited to, 2-phenoxyethylacrylate, propoxylated 2 neopentyl glycol diacrylate, polyethylene glycol diacrylate, pentaerythritol triacrylate, 2-(2-ethoxyethoxy) ethyl acrylate, butyl acrylate, styrene acrylate copolymers, and others.

While the exact amount of binder used depends on the metal phosphonate and concentration, as well as the textile substrate onto which the flame retardant additive is applied, it has been shown that in the case of various textile substrates, the concentration of the binding agent in the flame retardant additive compositions described herein can be low, i.e., lower than 20 weight percent of the total weight of the flame retardant additive composition, preferably lower than 15 weight percent of the total weight of the flame retardant additive composition and most preferably less than 10 weight percent of the total weight of the flame retardant additive composition.

According to a still further aspect of the invention, the flame retardant additive composition further comprises at least one additional ingredient selected from the group consisting of an additional flame retardant, a smoldering suppressant, surface active agent, a wetting agent, a dispersing agent, a suspending agent, a thickening agent, a defoaming and/or antifoaming agent, a preservative and/or a stabilizing agent, a pH buffer, an additional solvent, a salt and, an oxide.

Examples of suitable additional flame retardants include at least one of aromatic phosphates like triphenyl phosphate or alkylated triphenyl phosphates or bridged aromatic phosphates like resorcinol bis(diphenyl phosphate), resorcinol bis(di-2,6-methylphenyl phosphate), bisphenol A (diphenyl phosphate), hydroquinone bis(diphenyl phosphate), dicyandiamide, melamine, melamine salts like melamine phosphate, melamine pyrophosphate, melamine polyphosphate and melamine cyanurate.

Examples of suitable smoldering suppressants include, but are not limited to urea, melamine and phosphate salts.

The surface active agents and/or wetting agents can be nonionic and/or ionic (cationic or anionic) agents.

Examples of nonionic surface active and/or wetting agents that are suitable for use in the context of the present invention include, but are not limited to, polyoxyethylene (POE) alkyl ethers, preferably NP-6 (Nonylphenol ethoxylate, 6 ethyleneoxide units) such as DisperByk® 101.

Examples of anionic surface active and/or wetting agents that are suitable for use in the context of the present invention include, but are not limited to, free acids or organic phosphate esters or the dioctyl ester of sodium sulfosuccinic acid.

Examples of dispersing agents and/or suspending agents and/or thickening agents that are suitable for use in the context of the present invention include, but are not limited to, acrylic acids, acrylic acids ester copolymer neutralized sodium polycarboxyl such as naphthalene sulfonic acid-formaldehyde condensate sodium salt, alginates, cellulose derivatives and xanthan. In one non-limiting embodiment the thickening agent is carboxymethyl cellulose.

Examples of defoaming and/or antifoaming agents that are suitable for use in the context of the present invention, include, but are not limited to, mineral oil emulsions, natural oil emulsions, and preferably are silicon oil emulsions, such as AF-52.TM.

Examples of preserving and/or stabilizing agents that are suitable for use in the context of the present invention, include, but are not limited to, formaldehyde and alkyl hydroxy benzoates; preferably the preserving or stabilizing agents is a mixture of methyl and propyl hydroxy benzoates.

An additional solvent can comprise any one or more of the carriers described above other than any initial carrier that is used in the flame retardant additive composition.

The textile can be selected from the non-limiting group consisting of synthetic textiles, natural textiles and blends thereof. Non-limiting examples of textile substrates that can be beneficially used in the context of the present invention include wool, silk, cotton, linen, hemp, ramie, jute, acetate fabric, acrylic fabric, latex, nylon, polyester, rayon, viscose, spandex, metallic composite, carbon or carbonized composite, and any combination thereof. Preferable nonlimiting examples of textile fabrics which were shown to be suitable for use in the context of the present invention include, without limitation, cotton, polyester, and combinations thereof.

The textile utilized according to embodiments of the present invention may be used as a single layer or as part of a multi-layer protective garment.

A textile of the invention herein may be incorporated in various articles, where it is desired to reduce the flammability of textiles used in such articles.

Exemplary articles according to the present invention include any industrial product that comprises one or more textile substrates and hence application of the FR additive composition described herein thereon is beneficial. Preferably, some exemplary non-limiting articles which comprise the textile containing the flame retardant additive composition described herein include, without limitation, furniture, toys, electrical appliances, a drapery, a garment, linen, bedding, a mattress, a carpet, a tent, a sleeping bag, a toy, a decorative fabric, an upholstery, a wall fabric, a curtain and any other technical textile. Technical textiles are textiles used in industrial, automotive, construction, agricultural, aerospace, hygiene and similar applications.

Some articles, such as garments, linen and some decorative or technical textiles, are subject to harsh usage (abrasion, exposure to various environmental conditions etc.) and therefore may need extensive, sometimes daily, cleaning and washing. So far, fire proofing these articles involved either using the few available non-flammable fabrics; coating flammable fabrics with large amounts of FR, thus often damaging the fabric properties; or applying low amounts of FR on the flammable fabric, but limiting its cleaning method to the expensive and burdensome dry cleaning method. Using the FR additive compositions presented herein, these garments or technical textiles may be fire proofed while maintaining the feel and look of the fabric, as a result of applying relatively small amounts of the flame retardant additive composition described herein. The other types of articles in the list provided above, such as the non-limiting examples of draperies, carpets, tents, sleeping bags, toys, wall fabrics, decorative fabrics, mattresses and upholsteries, are not washed as much as garments or linen. However, these articles also call for efficient fire proofing thereof, while maintaining their durability during periodic cleaning. These articles may easily be made fire proof, either by using a textile treated by the flame retardant additive composition described herein during the manufacturing process, or by easily applying the flame retardant additive composition described herein onto the final product textile or article made therefrom.

According to another aspect of the invention the article comprising a textile substrate which contains the flame retardant additive composition described herein, is a flammable article prior to being contacted with the flame retardant additive composition described herein.

The article (as well as the textile contained in the article) described herein can be characterized by an after flame time of less than 120 seconds (sec), smoldering time of less than 15 minutes (min) and charring distance of less than 100 millimeters (mm), as defined by BS 5852 Part 1 of the 20 seconds ignition test, which is considered a pass of this test.

According to a still further feature of the invention there is provided a textile substrate (e.g., a flammable textile substrate) in the article, which textile contains the flame retardant additive composition, wherein the textile is characterized by at least one aesthetic or textural property which aesthetic or textural property is identical to that of a textile substrate which does not contain the flame retardant additive composition.

Preferably, such an aesthetic or textural property is selected from the group consisting of flexibility, smoothness, color vivacity, and lack of streakiness. More preferably, these properties remain substantially unchanged upon subjecting the article to one or more washing cycles, and more preferably, to five or more washing cycles, and even more preferably to 25 or more washing cycles.

The flame retardant additive composition can be used in a flame retardant effective amount in the textile. A flame retardant effective amount will vary depending on the specific metal phosphonate and textile, and other parameters.

According to still further aspects of the invention, the flame retardant effective amount of the flame retardant additive composition is characterized in that the dry amount of the flame retardant additive composition (dry add-on) is less than 35 weight percent of the textile substrate's dry weight. Preferably, the dry add-on is less than 30 weight percent of the textile substrate's dry weight. More preferably, the dry add-on is less than 25 weight percent of the textile substrate's dry weight, and most preferably the dry add-on is less than 20 weight percent of the textile substrate's dry weight. Thus, it should be appreciated that the textile substrates treated with the flame retardant additive compositions described herein are characterized by a relatively low dry add-on.

With regard to dry add-on calculation, the phrase "amount of the flame retardant additive composition" refers to the amount of non-volatile components within the flame retardant additive composition, which remain on the fabric after curing and drying. The dry add-on value is determined by calculating the difference in weight of the dry fabric before application of the flame retardant additive composition and after drying and curing of the applied of the flame retardant additive composition.

Examples of non-volatile components within the flame retardant additive composition, include, but are not limited to, metal phosphonate(s) and binder(s).

According to yet an additional aspect herein there is provided a process of applying any of the flame retardant additive compositions described herein, to a textile substrate, the process comprising contacting the textile substrate with the flame retardant additive composition described herein. Preferably, the contacting is effected by any industrially acceptable manner, preferably by spreading, padding, foaming and/or spraying means.

Padding is a process that is typically used for applying the flame retardant additive composition onto a textile substrate and is defined as a process in which the textile is first passed through a padder containing the FR additive composition wherein the composition is applied, and the textile is then squeezed between heavy rollers to remove any excess of the flame retardant additive composition.

The process described herein can be affected, for example, either during the dying or the finishing stages of the textile substrate manufacture.

In another more specific embodiment herein there is provided a process comprising coating a textile substrate with the flame retardant additive composition described herein, preferably by any one or more of the aforementioned spreading, padding, foaming and/or spraying means.

According to still further features in the described preferred embodiments the processes described herein further comprise, subsequent to the contacting (or coating), heating the textile substrate. Preferably, the textile substrate is heated to a temperature of from about 100°C to about 200°C, preferably from about 150°C to about 170°C whereby the temperature is dictated by the curing temperature of the binder.

In one embodiment herein the flame retardant additive composition is packaged in a packaging material and is identified in print in or on the packaging material for use as a flame retardant for application on a textile substrate.

According to another embodiment of this aspect of the present invention, the process is conducted under basic pH conditions.

According to another embodiment of the process according to this aspect of the present invention, prior to or subsequent to the milling, there is added to the dispersion at least one additional ingredient as described herein.

Consequently, as previously delineated, the flame retardant additive compositions prepared by the process described herein, are characterized by an increased storage stability, being stable for at least two weeks at about room temperature, and often being stable for at least four weeks at that temperature. Stability is defined as no visual separation of suspension being observed.

The flame retardant additive compositions described herein can be efficiently used when applied on textiles, by avoiding the need to use excessive amounts of the flame retardant, binders, and other additives. Furthermore, these flame retardant additive compositions are easily applied onto the textile substrate.

According to one aspect of the present invention there is provided a textile which contains, (e.g., has been treated with) a flame retardant additive composition comprising a metal phosphonate, (e.g., aluminum methyl methylphosphonate (AMMP)) and a carrier.

As is demonstrated in the Examples section that follows, the formulations and processes described herein were practiced so as to provide textile substrates having the

FR additive composition applied thereon. The resulting textile substrate is characterized by enhanced flame retardancy, while still maintaining its aesthetical and textural properties.

As is demonstrated in the Examples section that follows, it was found that AMMP formulations containing 14.2 weight percentages of a binder were well adhered to the substrates. Thus, for example, it has been demonstrated that a Jacquard upholstery fabric, design: EVERLY, composed of 33% Polyester; 33% Acrylic; 34% Cotton fabric having a AMMP formulation that contains 14.2% by weight of a binder applied thereon, passed a 20 seconds ignition test BS 5852.

The smoldering suppression and/or flame retardancy of the tested textile substrates were determined by methods acceptable in the industry, for example a 20 seconds ignition test, which is defined in BS 5852, Part 1, a test method used to measure the flame retardancy of an upholstered chair mock-up. Considering the results of the BS 5852 test, a textile may be classified on a pass/fail basis, according to predetermined criteria. Upholstered textile is considered to have failed BS5852 ignition source 1 test, if either shows "progressive smoldering ignition" or "flaming ignition". Specimens considered failing "progressive smoldering ignition" if it either produces detectable amounts of smoke, heat or glowing 15 min after removal of the burner tube or if specimen after final examination shows charring more 100 mm in any direction apart of upwards. Specimens considering failing 'flaming ignition" if any test specimen continues to flame for more than 120 seconds after removal of the burner tube or if flame front reaches the extremities of the specimen other than the top of the vertical part. A fabric is considered to have very good flame retardancy if all of the above criteria are met.

Using this method, it was demonstrated, for example, that a bone-dry (as defined hereinafter the term "bone-dry" describes a substrate having zero percent moisture content) jacquard upholstery fabric (design Everly) composed of 33% polyester; 33% acrylic and 34% cotton, weight of 460 g/m² which was padded with a AMMP dispersion with solids adds-on of 35 wt. %, according to preferred embodiments of the present invention, passed BS5852 test (5 consecutive flame application in fresh, not flame damaged area) Similarly, a bone-dry woven drill flannel 100% cotton weight 335 g/m², which was padded with AMMP dispersion with solids adds-on 17.6 wt. % according to preferred embodiments of the present invention passed BS5852 test. These results demonstrate the excellent flame retardant properties obtained by applying the metal phosphonate flame retardant additive compositions of the present embodiments onto textile substrates.

Thus, the articles according to the present invention are characterized by passing both "progressive smoldering ignition" criteria and "flaming ignition" criteria of BS5852 test, ignition source 1.

As is further demonstrated in the Examples section that follows, it has been shown that upon applying the FR additive compositions described herein onto textile substrates, the textile substrates maintained other textural and aesthetic properties. Thus, it has been shown that textile substrates coated with the flame retardant additive composition described herein were characterized by feel and appearance similar to those of a non-treated flammable textile substrate. Thus, for example, properties such as the flexibility, smoothness, color vivacity and streak-free look of a non-treated textile were maintained upon application of the FR additive composition.

Hence, according to another embodiment of the present invention, the article herein, which contains the textile containing the flame retardant additive composition described herein, is further characterized by at least one aesthetical or textural property which property is equivalent to an equivalent article which contains an equivalent textile which textile does not contain the flame retardant additive composition described herein.

As a result, articles having textile substrates, treated by the flame retardant additive composition described herein have superior properties compared with the presently known FR-treated products.

According to the presently most preferred embodiments of the present invention, the article herein comprises a flammable textile which has been treated with the flame retardant additive composition herein.

It is to be understood that the invention is not limited in its application to the details of construction and the arrangement of the components set forth in the description herein. The invention is capable of other embodiments or of being practiced or carried out in various ways. Also, it is to be understood that the phraseology and terminology employed herein is for the purpose of description and should not be regarded as limiting. Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

### EXAMPLES

### Example 1

AMMP was dispersed in water and the following formulation was prepared (Table 1.):

**Table 1: Dispersion Composition of AMMP**

| Composition | wt % |
|---|---|
| Total dry solids | 38.5 |
| AMMP | 28.6 |
| Surfactant (Triton X-100) | 2.9 |
| Binder (AC-156) | 14.2 |
| Water | 54.3 |

The dispersion was white and smooth. There was no need to use thickener in the dispersion in that the dispersion was sufficiently thick in and of itself. The dispersion was applied on the following fabrics:
1. Jacquard upholstery fabric, design: Everly
   Composition: 33% Polyester; 33% Acrylic; 34% Cotton
   Weight: 460 g/m²
   Warp yam: 167 dTex
   Weft yams: Nm 4 Acrylic Chenille; Nm 4 Cotton Chenille
   70 warp ends and 13 weft ends per cm
2. Woven drill flannel 100% cotton 335 g/m².

Weighted amount of the dispersion was poured on the top of the fabric fixed on the table and then uniformly distributed on the surface with a knife. The coating layer appeared homogenous. Curing and fixation were performed at 160° C. The fabric samples were tested further according to the BS5852 standard for back-coatings, (match source 20 seconds ignition). Add-on and standard results are presented in Table 2: A sheet of fabric was ignited 5 times (20 sec each), every time in new non damaged spot. All five ignitions issued pass result.

**Table 2: Results and Material Composition on Fabric**

| Sample Number | % Add-on | %FR | %P | Pass/Fail |
|---|---|---|---|---|
| 1823-01 (Everly) | 34 | 25 | 6.5 | 5 passes |
| 1823-02 (Cotton) | 17.6 | 13.5 | 3.5 | 5 passes |

The percentage of back-coating (also called add on) and phosphorus content of the back-coated fabric were determined by using with the following formulas:
1) [[[(weight of the coated fabric)/(L(cm) x W(cm) of the fabric)] x 10000] - (weight of the uncoated fabric(g/m²)] = back-coating weight(g/m²)
2) [(back-coating weight(g/m²))/(weight of the uncoated fabric(g/m²)) x 100 = % of the back-coating on the fabric

The percentage of phosphorus on the fabric is calculated with the following formula:
1) (% of the back-coating on the fabric) x (% FR dispersion in dry pphr in the back-coating) = % phosphorus FR on the fabric
2) (% phosphorus FR on the fabric) x (% phosphorus content in the FR) = % of phosphorus on the fabric

## Claims

1. A textile comprising a flame retardant effective amount of a flame retardant additive composition comprising a metal phosphonate, wherein the metal phosphonate is selected from the group consisting of metal phosphonates of alkaline earth and/or transition metals.

2. The textile of Claim 1, wherein the alkaline earth and/or transition metals are selected from the group consisting of Ca, Zn, Al, Fe, Ti and combinations thereof.

3. The textile of Claim 1, wherein the metal phosphonate is aluminum methyl methylphosphonate.

4. The textile of Claim 1, wherein the flame retardant additive composition further comprises a carrier which is selected from the group consisting of an aqueous carrier, an organic carrier and a combination thereof.

5. The textile of Claim 4, wherein the carrier is an aqueous carrier and wherein the flame retardant additive composition is in the form of a dispersion.

6. The textile of Claim 5, wherein said dispersion comprises a plurality of aluminum methyl methylphosphonate particles having an average particle size of less than about 50 microns.

7. The textile of claim 1, wherein the flame retardant additive composition further comprises at least one additional ingredient selected from the group consisting of an additional flame retardant, a smoldering suppressant, a surface active agent, a wetting agent, a dispersing agent, a suspending agent, a thickening agent, a defoaming and/or antifoaming agent, a preservative and/or a stabilizing agent, a pH buffer, a binding agent, an additional solvent, a salt, an oxide, and any mixtures thereof.

8. The textile of Claim 1, wherein a flame retardant effective amount of the flame retardant additive composition is a dry add on amount of less than 35 weight percent of the weight of the dried textile.

9. The textile of Claim 1, wherein the flame retardant additive composition is in the form of a dispersion of aluminum methyl methylphosphonate in an aqueous solvent comprising a dispersing agent and a binder.

10. A process comprising applying a flame retardant effective amount of a flame retardant additive composition to a textile substrate, wherein the flame retardant additive composition comprises a metal phosphonate selected from the group consisting of metal phosphonates of alkaline earth and/or transition metals.

11. The process of Claim 10, wherein the alkaline earth and/or transition metals are selected from the group consisting of Ca, Zn, Al, Fe, Ti and combinations thereof.

12. The process of Claim 10, wherein the flame retardant additive composition further comprises an aqueous carrier and wherein the flame retardant additive composition is in the form of dispersion.

13. The process of Claim 12, wherein said dispersion comprises a plurality of aluminum methyl methylphosphonate particles having an average particle size of less than about 50 microns.

14. An article comprising the textile of Claim 1.

15. The article of Claim 14, wherein the article is selected from the group consisting of furniture, a drapery, a garment, linen, a mattress, a carpet, a tent, a sleeping bag, a toy, a decorative fabric, an upholstery, a wall fabric, a curtain, carpeting, technical textiles and combinations thereof.

## Patentansprüche

1. Textil mit einem Brandschutzmittel-Effektivbetrag an einer Brandschutzmittel-Additivzusammensetzung, welche aufweist ein Metall-Phosphonat, wobei das Metall-Phosphonat ausgewählt ist von der Gruppe, welche besteht aus Metall-Phosphonaten aus alkalischen Erden und/oder Übergangsmetallen.

2. Textil gemäß Anspruch 1, wobei die alkalischen Erden und/oder Übergangsmetalle ausgewählt sind aus der Gruppe, welche besteht aus Ca, Zn, Al, Fe, Ti und Kombinationen daraus.

3. Textil gemäß Anspruch 1, wobei das Metall-Phosphonat Aluminium-Methyl-Methylphosphonat ist.

4. Textil gemäß Anspruch 1, wobei die Brandschutzmittel-Additivzusammensetzung ferner aufweist einen Träger, welcher ausgewählt ist aus der Gruppe, welche besteht aus einem wässrigen Träger, einem organischen Träger und einer Kombination daraus.

5. Textil gemäß Anspruch 4, wobei der Träger ein wässriger Träger ist und wobei die Brandschutzmittel-Additivzusammensetzung in der Form einer Dispersion ist.

6. Textil gemäß Anspruch 5, wobei die Dispersion aufweist eine Mehrzahl von Aluminium-Methyl-Methylphosphonat-Partikeln, die eine Durchschnittspartikelgröße von weniger als etwa 50 Mikrometer haben.

7. Textil gemäß Anspruch 1, wobei die Brandschutzmittel-Additivzusammensetzung ferner aufweist wenigstens einen zusätzlichen Bestandteil, der ausgewählt ist aus der Gruppe, welche besteht aus einem zusätzlichen Brandschutzmittel, einem Schwelbrandunterdrückungsmittel, einem oberflächenaktiven Mittel, einem Benetzungsmittel, einem Dispergiermittel, einem Suspensionsmittel, einem Verdickungsmittel, einem Entschäumungs- und/oder Antischaummittel, einem Konservierungs- und/oder Stabilisierungsmittel, einem pH-Puffer, einem Bindemittel, einem zusätzlichen Lösungsmittel, einem Salz, einem Oxid und Mischungen daraus.

8. Textil gemäß Anspruch 1, wobei ein Brandschutzmittel-Effektivbetrag der Brandschutzmittel-Additivzusammensetzung ein Trockenzusatzbetrag von weniger als 35 Gewichtsprozent des Gewichts des getrockneten Textil ist.

9. Textil gemäß Anspruch 1, wobei die Brandschutzmittel-Additivzusammensetzung in der Form einer Dispersion aus Aluminium-Methyl-Methylphosphonat in einer wässrigen Lösung ist, welche ein Dispergiermittel und einen Binder aufweist.

10. Prozess aufweisend Einsetzen eines Brandschutzmittel-Effektivbetrags einer Brandschutzmittel-Additivzusammensetzung bei einem Textilsubstrat, wobei die Brandschutzmittel-Additivzusammensetzung aufweist ein Metall-Phosphonat, das ausgewählt ist aus der Gruppe, welche besteht aus Metall-Phosphonaten aus alkalischen Erden und/oder Übergangsmetallen.

11. Prozess gemäß Anspruch 10, wobei die alkalischen Erden und/oder Übergangsmetalle ausgewählt sind aus der Gruppe, welche besteht aus Ca, Zn, Al, Fe, Ti und Kombinationen daraus.

12. Prozess gemäß Anspruch 10, wobei die Brandschutzmittel-Additivzusammensetzung ferner aufweist einen wässrigen Träger und wobei die Brandschutzmittel-Additivzusammensetzung in der Form von Dispersion ist.

13. Prozess gemäß Anspruch 12, wobei die Dispersion aufweist eine Mehrzahl von Aluminium-Methyl-Methylphosphonatpartikeln, welche eine Durchschnittspartikelgröße von weniger als etwa 50 Mikrometer haben.

14. Artikel mit dem Textil gemäß Anspruch 1.

15. Artikel gemäß Anspruch 14, wobei der Artikel ausgewählt ist aus der Gruppe, welche besteht aus Möbelware, einer Stoffware, einer Bekleidungsware, Bettwäscheware, einer Matratzenware, einer Teppichware, einer Zeltware, einer Schlafsackware, einer Spielware, einer Dekorationsstoffware, einer Polstermöbelware, einer Wandstoffware, einer Vorhangware, einer Teppichbodenware, technische Textilien und Kombinationen daraus.

## Revendications

1. Textile comprenant une quantité ignifugeante efficace d'une composition d'additif ignifugeant comprenant un phosphonate de métal, dans lequel le phosphonate métallique est choisi dans le groupe constitué des phosphonates métalliques de métaux alcalino-terreux et/ou de transition.

2. Textile selon la revendication 1, dans lequel les métaux alcalino-terreux et/ou de transition sont choisis dans le groupe constitué de Ca, Zn, Al, Fe, Ti et de combinaisons de ceux-ci.

3. Textile selon la revendication 1, dans lequel le phosphonate métallique est le méthylphosphonate de méthylaluminium.

4. Textile selon la revendication 1, dans lequel la composition d'additif ignifugeant comprend en outre un support qui est choisi dans le groupe constitué d'un support aqueux, d'un support organique et d'une combinaison de ceux-ci.

5. Textile selon la revendication 4, dans lequel le support est un support aqueux et dans lequel la composition d'additif ignifugeant est sous la forme d'une dispersion.

6. Textile selon la revendication 5, dans lequel ladite dispersion comprend une pluralité de particules de méthylphosphonate de méthylaluminium ayant une taille moyenne de particule inférieure à environ 50 microns.

7. Textile selon la revendication 1, dans lequel la composition d'additif ignifugeant comprend en outre au moins un ingrédient supplémentaire choisi dans le groupe constitué d'un ignifugeant supplémentaire, d'un agent d'extinction de combustion couvante, d'un agent tensioactif, d'un agent mouillant, d'un agent dispersant, d'un agent de suspension, d'un agent épaississant, d'un agent de démoussage et/ou antimousse, d'un conservateur et/ou d'un agent stabilisant, d'un tampon de pH, d'un agent liant, d'un solvant supplémentaire, d'un sel, d'un oxyde, et de tout mélange de ceux-ci.

8. Textile selon la revendication 1, dans lequel une quantité ignifugeante efficace de la composition d'additif ignifugeant est une quantité d'ajout à sec inférieure à 35 pour cent en poids du poids du textile séché.

9. Textile selon la revendication 1, dans lequel la composition d'additif ignifugeant est sous la forme d'une dispersion de méthylphosphonate de méthylaluminium dans un solvant aqueux comprenant un agent dispersant et un liant.

10. Procédé comprenant l'application d'une quantité ignifugeante efficace d'une composition d'additif ignifugeant à un substrat de textile, dans lequel la composition d'additif ignifugeant comprend un phosphonate métallique choisi dans le groupe constitué des phosphonates métalliques de métaux alcalino-terreux et/ou de transition.

11. Procédé selon la revendication 10, dans lequel les métaux alcaline-terreux et/ou de transition sont choisis dans le groupe constitué de Ca, Zn, Al, Fe, Ti et de combinaisons de ceux-ci.

12. Procédé selon la revendication 10, dans lequel la composition d'additif ignifugeant comprend en outre un support aqueux et dans lequel la composition d'additif ignifugeant est sous la forme d'une dispersion.

13. Procédé selon la revendication 12, dans lequel ladite dispersion comprend une pluralité de particules de méthylphosphonate de méthylaluminium ayant une taille moyenne de particule inférieure à environ 50 microns.

14. Article comprenant le textile selon la revendication 1.

15. Article selon la revendication 14 dans lequel l'article est choisi dans le groupe constitué de meubles, de tentures, d'un vêtement, de draps, d'un matelas, d'un tapis, d'une tente, d'un sac de couchage, d'un jouet, d'une étoffe décorative, d'un tissu d'ameublement, d'un revêtement mural, d'un rideau, de moquette, de textiles techniques et de combinaisons de ceux-ci.
